# EUROPEAN PATENT SPECIFICATION

(11) **EP 2 396 940 B1**
(45) Date of publication and mention of the grant of the patent: **30.05.2018**
(21) Application number: 09788487.8
(22) Date of filing: 13.02.2009
(51) Int. Cl.: H04L 29/06, H04L 29/08

(54) **A METHOD AND AN ARRANGEMENT FOR HANDLING RESOURCE DATA**
VERFAHREN UND ANORDNUNG ZUM UMGANG MIT RESSOURCENDATEN
PROCÉDÉ ET AGENCEMENT DE GESTION DE DONNÉES DE RESSOURCES

(43) Date of publication of application: 21.12.2011
(73) Proprietor: Telefonaktiebolaget LM Ericsson (publ), 164 83 Stockholm (SE)
(72) Inventor: BOBERG, Christer, S-137 55 Tungelsta (SE); KLEIN, Mikael, S-141 63 Huddinge (SE); LASSBORN, Sofie, S-191 43 Sollentuna (SE); LINDGREN, Anders, S-125 74 Älvsjö (SE)
(74) Representative: Brann AB
(86) International application number: PCT/SE2009/050153
(87) International publication number: WO 2010/093295

(56) References cited:
- EP-A- 1 873 976
- ETTER R ET AL: "A Rule-Based Approach Towards Context-Aware User Notification Services" 2006 ACS/IEEE INTERNATIONAL CONFERENCE ON PERVASIVE SERVICES JUNE 26-29, 2006, PISCATAWAY, NJ, USA,IEEE, 26 June 2006 (2006-06-26), pages 281-284, XP010926276 ISBN: 978-1-4244-0237-3
- KHARTABIL TELIO E LEPPANEN M LONNFORS J COSTA-REQUENA NOKIA H: "Functional Description of Event Notification Filtering; draft-ietf-simple-event-filter-funct-05.tx t" IETF STANDARD-WORKING-DRAFT, INTERNET ENGINEERING TASK FORCE, IETF, CH, vol. simple, no. 5, 15 March 2005 (2005-03-15), XP015027570 ISSN: 0000-0004

## Description

### TECHNICAL FIELD

The invention relates generally to a method and arrangement for handling a subscription for resource data of an observed resource, such as a client, document or content service.

### BACKGROUND

With the emergence of 3G mobile telephony, new packet-based communication technologies using IP (Internet Protocol) have been developed to support the usage of multimedia services, while different mobile and fixed user terminals with new functionalities for multimedia communication are emerging on the market. New services are also constantly being developed for terminal users to increase the field of usage and enhance the quality of experience when generally consuming multimedia services.

An IMS (IP Multimedia Subsystem) network can be used to enable multimedia services by initiating and controlling multimedia sessions for user terminals connected to various different access networks.

The signalling protocol called "SIP" (Session Initiation Protocol) is commonly used for handling multimedia sessions in IMS networks and other communication services networks. IMS is mentioned in this description for illustrative purposes, without limiting the invention to IMS networks exclusively. A user and his/her communication terminal is often referred to as a "client", which term will be generally used here.

A particular example of IMS enabled services is "presence" services, involving publication of presence data of a client to make it available to other clients or applications. Presence data basically refers to the status, situation or state of the client, e.g. including the client's current geographical position, connection status, service availability and terminal capabilities, as well as any personal characteristics, preferences and settings. Presence data can be stored in a presence server in the IMS network, based on the publication of such client related information. These publications may be obtained either from the client's terminal or from the access network used by the client, whenever any presence data of the client becomes available or is updated.

A client may also subscribe to selected presence data of one or more other clients, e.g. according to a predefined list of an established or predefined client group. Presence subscriptions are typically also handled by a presence server in the IMS network and may involve various information filters, admission rules and policies. The subscribing client can then receive notifications from the presence server regarding current presence data, subject to any prevailing filters, rules or policies, either automatically or upon request.

In SIP, a message called "PUBLISH" can be used by clients to provide data to the presence server. This message is used basically to initiate new data, "refresh" data (i.e. confirming that earlier initiated data continues to be valid), modify data, and to terminate data no longer valid. Further, a message called "SUBSCRIBE" can be used by clients to subscribe to presence data of other clients, as handled by the presence server, and only authorised clients are entitled to receive such data. Another message called "NOTIFY" can be used by presence servers to present presence data to subscribing clients. Yet another message called "REGISTER" can be used by clients to log on to an IMS network or an access network.

While presence services are mostly based on the publication of client data, a client may generally subscribe to data of any resource using basically the mechanism described above, which may be, apart from another client, any object of interest such as a document, a content service or information service. For example, a notification for group or data management may refer to changes in a document such as a contact list or address book. Further, notifications for content services or information services may refer to a stock exchange, weather forecast, sports results or any other information updates. In general, a resource data notification may refer to any state changes or updates of an observed resource according to a resource data subscription.

In this description, the term "watching client" represents a client that subscribes to or requests resource data, and the term "observed resource" represents a resource for which resource data is published to be available for authorised watching clients. In the context of presence services, a watching client is referred to as the "Watcher" and an observed client is referred to as the "Presentity". For example, a notification may also refer to a watcher request basically asking the presentity to authorize the watcher to receive certain presence information.

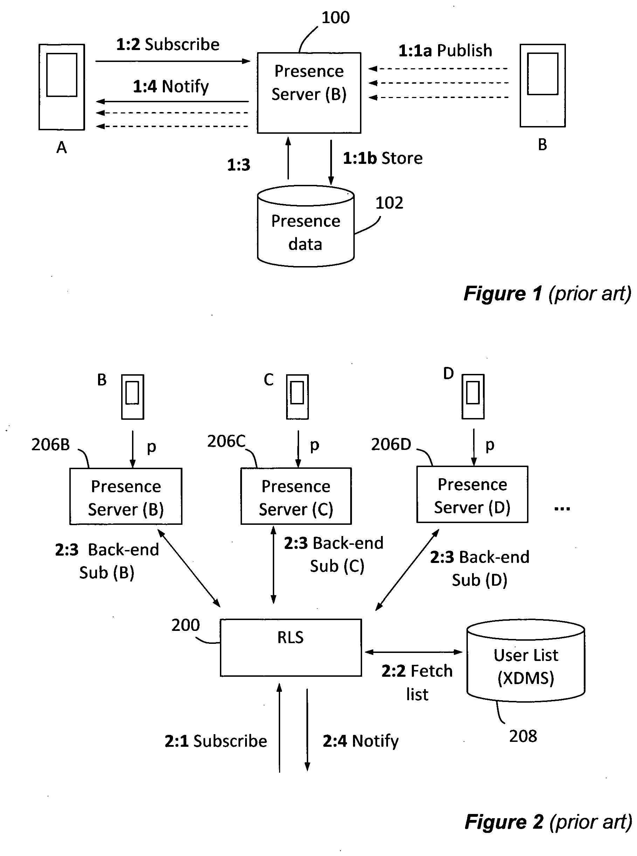

The SUBSCRIBE message above typically contains a time-out parameter that can be set to determine the duration of the subscription, sometimes referred to as TTL (Time To Live). If the time-out parameter in a SUBSCRIBE message is set to zero, a notification with requested presence data is obtained just once and the subscription is promptly terminated thereafter. If the time-out parameter is set to a certain time period >0, the watching client will receive notifications according to some predetermined scheme until the subscription period expires. Furthermore, the "SUBSCRIBE" message typically contains information regarding which client(s) to retrieve presence data from and which data to retrieve, etc. This information can be defined in a filter being included in the "SUBSCRIBE" message. ETTER R. ET AL: "A Rule-Based Approach Towards Context-aware User Notification Services", XP010926276 and IETF draft-ietf-simple-event-filter-funct-05, XP15027570 disclose subscribe-notify methods. FIGURE 1 illustrates a conventional procedure for providing presence data, involving a watching client A, an observed client B and a presence server 100 which stores presence data for client B in a database 102. A first step 1:1a generally illustrates that presence data is published for the observed client B by frequent PUBLISH messages to the presence server 100 according to conventional routines, either sent from client B or from client B's access network (not shown). A next step 1:1b illustrates that database 102 is updated according to the PUBLISH messages of step 1:1a. Steps 1:1a and 1:1b continue throughout in the background, according to prevailing routines.

In a step 1:2, client A sends a SUBSCRIBE message as a subscription request for presence data of client B, in which a time-out parameter for a desired subscription time period is specified. The presence server 100 then retrieves presence data of client B in a step 1:3, and sends it to client A in an initial notification message SIP NOTIFY, as shown in a step 1:4. As indicated by the dashed arrows in step 1:4, client A may receive such notifications on further occasions during the given subscription time, either at regular intervals or whenever the presence data is changed. In order to prolong or "refresh" the subscription, client A automatically sends further SUBSCRIBE messages just before the subscription time expires, and the presence server will then continue to send notifications to client A.

A watching client may also subscribe to presence data of several observed clients, which often results in numerous notifications for updated presence data being sent to the watching client. An information delivery server called RLS (Resource List Server) can then be used to collect notifications of multiple clients and send a joint notification for all observed clients to the watching client, thereby reducing the number of notifications. This joint notification may contain considerable amounts of data.

FIGURE 2 illustrates an RLS 200 providing information to a watching client A on clients B, C and D which publish data p to their respective presence servers 206B, 206C and 206D. A user list database 208 maintains various user lists on behalf of subscribing clients such as phone books, contact groups, ad hoc groups or the like, e.g. as specified in XDMS documents. In a first shown step 2:1, client A sends a subscription request for presence data to clients B,C,D as indicated by a reference to a predefined user list. RLS 200 then fetches the user list from database 208 in a step 2:2 and establishes back-end subscriptions for presence data of clients B,C,D with presence servers 206B-D to obtain the desired data as notifications there from in a step 2:3. In a final step 2:4, RLS 200 sends a joint notification to client A, containing desired data on all clients B-D.

When subscribing to resource data, the watching client may have to include parameters in each subscription request, defining which resource data to be retrieved from the observed resources, and also include parameters dictating the delivery of data to the watching client. However, these parameters typically comprise a relatively large amount of information, requiring much bandwidth. Moreover, the same parameters are often sent with plural subscription requests.

Hence, there are certain problems associated with the existing solutions outlined above. Considering the limited capacity for information transfer between the network nodes, it is a problem to design a system for handling resource data, without delaying the transferred information or causing a loss of power for the network nodes.

### SUMMARY

It is an object of the present invention to address at least some of the problems outlined above. In particular, it is an object to achieve a relatively efficient providing of resource data for one or more resources to a watching client. These objects and others may be achieved primarily by a solution according to the attached independent claims. The invention is defined in independent claim 1 specifying a method in a notification server and in independent claim 7 related to a notification server. According to one aspect, a method in a notification server is achieved for providing resource data regarding at least one resource to a watching client. In the notification server is a subscription request received. The subscription request is sent from the watching client and comprises a reference to at least one notification rule being pre-configured in a database for the watching client. The notification server may then obtain the pre-configured notification rule(s) from the database according to the reference. Then, the notification server may apply at least one of the notification rule(s) and retrieve resource data regarding the resource(s) from at least one resource data server based on the notification rule(s). The notification server may further receive notifications comprising the resource data from the resource data servers(s). The notification server may further apply at least one of the obtained notification rule(s) for delivering notifications to the watching client based on the notification rule(s). Furthermore, the notification server may apply at least one of the obtained notification rules for either transforming the received subscription request(s) into the resource data model applied by the resource(s), or transforming the retrieved resource data into the resource data model applied by the watching client.

By supplementing the subscription requests with a reference to pre-configured notification rules regarding the observed resource(s) instead of the actual notification rules, the amount of information being transferred with plural subscription requests for a watching client may be reduced. Moreover, by transforming the subscription requests and/or notifications between the applied resource data models, the amount of information being transferred may be further reduced.

According to another aspect, a notification server is achieved for providing resource data regarding at least one resource to a watching client. The notification server comprises a first communication unit adapted to receive a subscription request to the resource data regarding the resource(s) from the watching client on a first communication link. The first communication unit is further adapted to deliver at least one notification comprising the resource data to the watching client on the first communication link. Furthermore, the notification server comprises a notification rules manager adapted to identify a reference supplied with the subscription request and obtain notification rules from a database based on the reference. The notification rules manager is further adapted to retrieve resource data from a resource data server and form at least one notification comprising at least some of the retrieved resource data.

A notification rules storage unit is comprised in the notification server and is adapted to be uploaded with the obtained notification rule(s) by the notification rules manager and further adapted to store these notification rule(s). A resource data storage unit is also comprised in the notification server and is adapted to store resource data.

The notification rules manager is further adapted to apply at least one of the obtained notification rule(s) for either performing the retrieval of resource data, or forming the notifications.

The notification server is adapted to either act also as resource data server, or retrieve resource data from an external resource data server. When the notification server acts as resource data server, the notification rules manager may be further adapted to retrieve resource data from the resource data storage unit.

When the notification server communicates with an external resource data server, the notification server manager may be further adapted to retrieve resource data through a second communication unit which may be comprised in the notification server. The second communication unit may be adapted to communicate with the resource data server on a second communication link. The notification server manager may further comprise a transformer adapted to transform the subscription request(s) and/or notifications between the resource data models applied by the watching client and the observed resource(s). The transformer may be adapted to apply at least one of the obtained notification rule(s).

### BRIEF DESCRIPTION OF THE DRAWINGS

The present invention will now be described in more detail by means of exemplary embodiments and with reference to the accompanying drawings, in which:
- Figure 1: is a basic overview illustrating a scenario with a watching client and a resource associated to a notification server, according to prior art.
- Figure 2: is a basic overview illustrating a scenario with one or more resources associated to a notification server via one or more resource data servers, according to prior art.
- Figure 3: is a basic overview illustrating a scenario with a watching client and one or more resource data servers associated to a notification server, in accordance with one embodiment.
- Figure 4: is a basic overview illustrating a scenario with a watching client and one or more resource data servers associated to a notification server, in accordance with another embodiment.
- Figure 5: is a basic overview illustrating a scenario with a watching client and one or more notification server/resource data servers associated via a notification server, in accordance with a further embodiment.
- Figure 6: is a basic overview illustrating a scenario with a watching client associated to one or more notification server/resource data servers, in accordance with a further embodiment.
- Figure 7: is a flow chart illustrating a procedure for subscribing to resource data for one or more resources performed in a notification server, in accordance with a further embodiment.
- Figure 8a: is a block diagram illustrating a notification server for enabling subscription to resource data, in accordance with a further embodiment.
- Figure 8b: is a block diagram illustrating a notification server for enabling subscription to resource data, in accordance with a further embodiment.

### DETAILED DESCRIPTION

Briefly described, the present invention provides a solution where a watching client can subscribe to resource data from one or more observed resources more efficiently. Notification rules regarding one or more observed resources may be pre-configured in a database for the watching client instead of being supplemented with every subscription request. A watching client which requests resource data for one or more observed resources sends a subscription request supplemented with a reference to one or more such pre-configured notification rules regarding the observed resource(s) to a notification server. The notification server uses the reference to obtain the pre-configured notification rules from the database, and the obtained notification rule(s) is applied for retrieving resource data from the observed resource(s).

Additionally, it is also possible to provide any one of the notification server or the resource data server with a transformer for transforming resource data from one resource data model into another resource data model.

It is also possible to apply different notification rules depending on the current access network, such that the delivery of notifications with resource data to an observed client is controlled according to the applied notification rule(s). A notification rule may be defined by means of a delivery filter, e.g. only allowing delivery of notifications with a certain type of resource data, notifications not exceeding a maximum data amount, notifications of one or more specific observed resources, or notifications at certain times of day, week or season.

Throughout this description, the term "notification rule" refers to any rule defining which data to be retrieved or how the data will be presented to a watching client, etc. Such notification rules are typically supplemented to a subscription request. A "filter" denotes at least one notification rule, and different kind of filters may define different sets of notification rules. For instance, a delivery filter may comprise notification rules relating how resource data shall be delivered to a watching client, and a presence filter may denote which resource data being of interest for a watcher.

Filters, as e.g. delivery filters and presence filters may be stored as files in a database. A delivery filter may be implemented as a trigger-filter, and a presence filter may be implemented as a what-filter, according to known standards. Such a what-filter defines which resource data are of interest to a watching client. A trigger-filter, defines parameters status changes, for which a watching client shall be notified of. The following example illustrates a use of an implementation of a what-filter, according to RFC 4660/4661

```
       SUBSCRIBE sip:List1@example.com SIP/2.0
       ...
        <?xml version="1.0" encoding="UTF-8"?>
        <filter-set
        xmlns="urn:ietf:params:xml:ns:simple-filter">
          <ns-bindings>
            <ns-binding prefix="pidf"
            urn="urn:ietf:params:xml:ns:pidf"/>
          </ns-bindings>
          <filter id="999" uri="sip:sarah@example.com">
            <what>
              <include type="namespace">
               urn:ietf:params:xml:ns:pidf</include>
              <exclude>
                //pidf:tuple/pidf:note</exclude>
            </what>
          </filter>
          <filter id="8439" uri="sip:alice@biloxi.com">
            <what>
              <include>
 //pidf:tuple/pidf:status/pidf:basic</include>
            </what>
          </filter>
        </filter-set>
```

However, the invention is not limited thereto; any suitable filters defining which resource data are to be retrieved or delivered to a watching client may be implemented in the manner described. For instance, in the case when a watching client and an observed resource apply different resource data models, parameters defining how one resource data model may be transformed into another resource data model may be implemented in anyone of the what-filters or the trigger-filters.

A notification rule may also include a rate limitation such that the frequency of notifications does not exceed a predefined limit, e.g. not more often than once an hour or every third hour, etc. It is also possible to control the notification delivery depending on a time-out or TTL parameter given in the subscription request, e.g. by selecting different notification rules. For example, if the TTL is set to zero, delivery of all notifications may be allowed or a delivery filter "x" may alternatively be applied, while if the time-out parameter is set to a certain time period >0, no delivery of notifications may be allowed or a delivery filter "y" may alternatively be applied, and so forth.

In this description, the term "notification server" is used to represent any server capable of providing requested resource data of one or more observed resources in notifications to authorised watching clients, e.g. a presence server or RLS node as described for Fig's 1 and 2, respectively. Reference will also be made to well-known SIP messages, although the invention is generally not limited thereto.

Furthermore, it is to be understood that the notification servers, resource data servers, subscribing clients, resources and databases in this description may comprise any additional conventional means providing functionality, such as e.g. various control units and memories, necessary for enabling common functions and features to operate properly. However, for simplicity reasons, any means or functionality which is not necessary for the understanding of the proposed enabling of the subscribing services has been omitted in the figures, and will not be discussed in any further detail in this description.

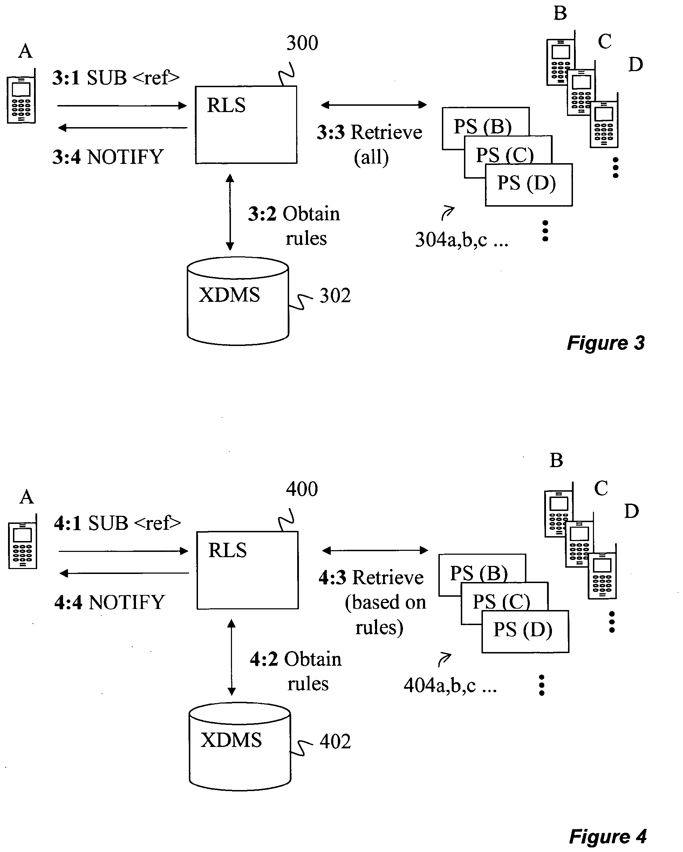

With respect to figures 3-6, some embodiments of the present invention will be described. The solution may be carried out with or without a Resource List Server (RLS). Furthermore, a notification server may be realised also as an RLS, or any suitable resource data server. Moreover, each of the resource data servers described in accordance with the embodiments may serve more than one observed resource. However, for simplicity reasons, only one observed resource is associated with each resource data server in the figures, without limiting the scope of invention thereto. In the figures below, only one terminal is associated with each client. However, a skilled person understands how to associate more than one terminal with the clients, e.g. one User Equipment and one computer.

With reference to FIGURE 3, an embodiment of a scenario where a watching client A subscribes to desired resource data from a notification server 300 for at least one observed resource B,C,D,..., will now be described. In this case, the notification server is implemented as an RLS. In a first **step 3:1,** the watching client A which subscribes to resource data initiates the subscription by sending a subscription request to a notification server 300, the subscription request being supplemented with a reference (denoted <ref> in the figure) to one or more notification rules being pre-configured in a database 302 which the notification server can access. The notification rule(s) may be stored as a filter in the database 302, e.g. formatted in accordance with the XML-format (extended Markup Language). The database 302 is here implemented as an XDMS (XML Document Management Server). The subscription request may be realised as a SUBSCRIBE message, e.g. SUBSCRIBE <ref>. However, the invention is not limited thereto, and the subscription request may also be realised as any other suitable message according to the used resource data model.

Then, in a subsequent **step 3:2,** the notification server 300 uses the received reference to obtain the notification rule(s) from the database 302. Obtaining the notification rule(s) may be performed as an HTTP GET operation, in accordance with the XCAP (XML Configuration Access Protocol), RFC 4825. However, the invention is not limited thereto; any other suitable protocol for obtaining notification rules may be used in the manner described.

In a subsequent **step 3:3,** the notification server 300 retrieves resource data from at least one resource data server 304a,b,c,... for the at least one observed resources B,C,D,... The retrieval may be performed by so called back-end subscriptions, and may be realised by sending a subscription request from the notification server 300 to at least one of the resource data servers 304a,b,c,... and receiving one or more notifications there from. The subscription request may be realised as a SUBSCRIBE message. The notifications may be realised as NOTIFY messages, including the resource data which the resource agrees to be supplied to the watching client A. Typically, the obtained notification rules may be split up by the notification server 300 based on which observed resource they relate to, and only the notification rules being relevant to each respective observed resource B,C,D,... will be supplemented to the subscriptions requests for that observed resource B,C,D,.... Furthermore, in the case that one notification rule relates to more than one observed resource, it will be supplemented to the subscription requests for every observed resource B,C,D,... it relates to.

In a final **step 3:4,** the desired resource data is delivered to the watching client A in accordance with the obtained notification rule(s). Such a notification rule might define how often the watching client A would be notified regarding updates of resource data for the observed resource B,C,D,... and which resource data are of interest to the watching client, and another notification rule might define if the watching client A is available for receiving updates. The resource data may be included in one or more notifications, which may be implemented as NOTIFY messages or any other message suitable to the used resource data model. How the watching client should be notified, e.g. how frequently, regarding which resource data being updated, etc., may be defined as a delivery filter.

In this embodiment the notification server 300 is implemented as an RLS, the database 302 as an XDMS, and the resource data servers 304a,b,c,... as presence servers. However, the servers and databases may be implemented as any other suitable communication nodes. Furthermore, one or more of the servers and the database may be implemented in one and the same communication node.

With reference to FIGURE 4, another embodiment of a scenario where a watching client A subscribes to desired resource data from a notification server 400 for at least one observed resource B,C,D,... will now be described. The **steps 4:1** and **4:2,** respectively, correspond to and are equal to the steps 3:1 and 3:2, respectively, of the embodiment described with reference to figure 3, which are not necessary to describe here again.

In a subsequent **step 4:3,** different from step 3:3 in the embodiment described with reference to figure 3, the notification server 400 retrieves the desired resource data from at least one resource data server 404a,b,c,... for the at least one observed resource B,C,D..., by supplementing at least one of the obtained notification rules (denoted <filter> in the figure) to a subscription request, the notification rules to be applied by the at least one resource data server 404a,b,c,... Such a notification rule may, for instance, define which resource data being desired by the watching client. Furthermore, as described in the embodiment above, the subscription requests in step 4:1 and 4:3 may be realised as a SUBSCRIBE messages and the desired resource data may be retrieved as one or more notifications. Thus, the subscription request(s) sent in step 4:3 differs from the subscription request(s) sent in step 3:3 of the embodiment above by being supplemented with at least one of the notification rules.

In a final **step 4:4,** the desired resource data is delivered to the watching client A in accordance with the obtained notification rule(s). This step is basically equal to the step 3:4 of the embodiment described with reference to figure 3.

Moreover, also in this embodiment the described servers 400, 404a,b,c,.. and database 402 may be implemented as one or more suitable communication node(s).

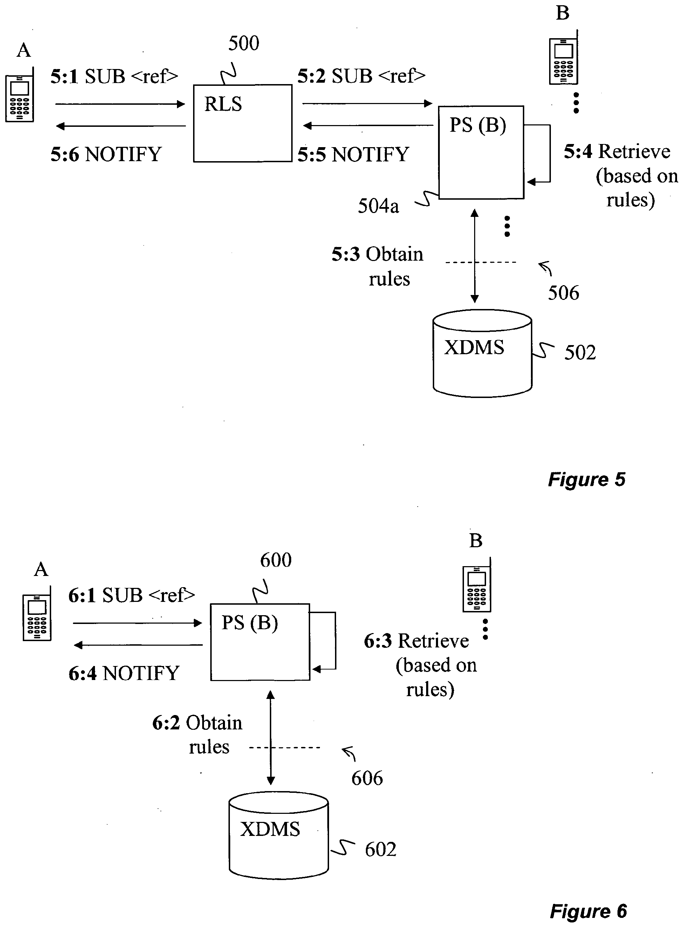

With reference to FIGURE 5, yet another embodiment of a scenario where a watching client A subscribes to desired resource data from a notification server 500 for at least one observed resource B,C,D,..., will now be described. This embodiment differs from the embodiments described with reference to figure 3 and 4 in that the resource data server(s) 504a,b,c,... also acts as notification servers, and obtains the desired notification rule(s) themselves instead of the notification server 500. The resource data servers 504b,c,... and the observed resources C,D,... are not shown in the figure.

The **step 5:1** is basically equal to the step 3:1 in the embodiment described with reference to figure 3, and is therefore not discussed in more detail here. The notification server 500 forwards the received subscription requests to the resource data server(s) 504a,b,c,..., in a subsequent **step 5:2.** Then, the resource data server(s) 504a,b,c,... obtains the notification rule(s) themselves from the database 502 in another subsequent **step 5:3,** according to the supplemented reference. Typically, the database 502 may be associated with the communication network of the watching client A and store pre-configured notification rule(s) regarding the observed resource(s) B,C,D,..., that are of interest to the watching client A. The database 502 may then be accessed by each notification server 504a,b,c,... over a network-to-network interface 506, e.g. in accordance with XCAP. However, the invention is not limited thereto, the database may be associated with another suitable network, which the notification server(s) 504,a,b,c,... can access.

In yet another **step 5:4,** the notification server(s) 504a,b,c,... retrieves the desired resource data. Correspondingly, to step 3:4, the notification servers 504a,b,c,... delivers the desired resource data as notifications to the watching client A in accordance with the obtained notification rule(s), in a subsequent **step 5:5.** However, the notifications are forwarded via the notification server 500, in another subsequent **step 5:6.**

In this embodiment, the notification server 500 affects neither the received subscription requests which are sent to the notification server(s) 504a,b,c,..., nor the notifications which are sent to the watching client A. However, it should be noted that a skilled person will be able to modify the notification server 500, e.g. to enable further notification rule(s) to be applied on the subscription request(s) or notifications by the notification server 500, or to affect the subscription request(s) and/or notifications.

With reference to FIGURE 6, yet another embodiment where a watching client A subscribes to desired resource data from a notification server 600 for at least one observed resource B,C,D,..., will now be described. The resource data servers 504b,c,... and the observed resources C,D,... are not shown in the figure. This embodiment differs from the embodiment described with reference to figure 5, in that the notification server 600 also acts as a resource data server for the observed resource(s) B,C,D,..., i.e. the watching client A is associated to the same communication network as the observed resource(s) B,C,D,... and no separate notification server is present.

In a first **step 6:1,** the watching client A which subscribes to resource data initiates the subscription by sending a subscription request to a notification server 600, the subscription request being supplemented with a reference (denoted <ref> in figure 6) to one or more notification rules being pre-configured in a database 602 which the notification server can access. Then in **step 6:2,** the notification server 600 uses the received reference to obtain the notification rule(s) from the database 602. However, also in this embodiment the notification rule(s) may be obtained over a network-to-network interface 606, as in the embodiment above. In a subsequent **step 6:3,** the desired resource data is retrieved. Finally, in **step 6:4,** the retrieved resource data is delivered to the watching client A in accordance with the obtained notification rule(s).

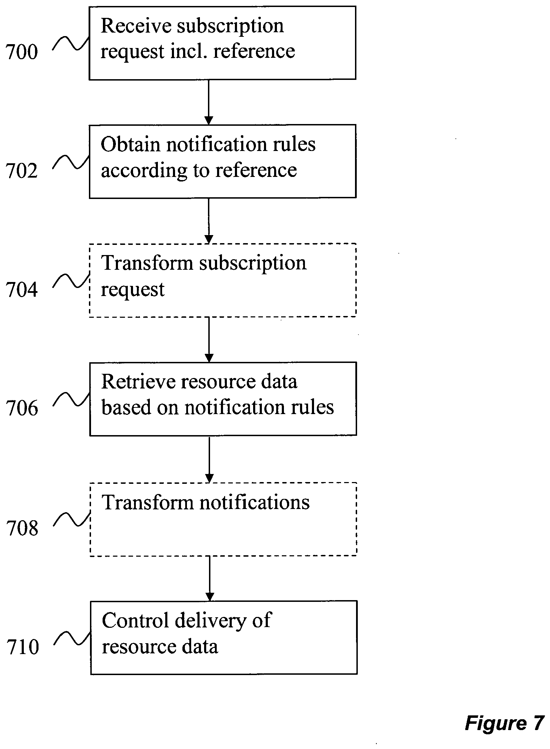

With reference to FIGURE 7, an embodiment where a notification server handles a subscription to resource data from a resource data server, serving at least one observed resource, will now be described. The subscription according to this embodiment is requested by a watching client. According to the present embodiment, the following steps are performed in the notification server.

In a first **step 700,** the notification server receives a subscription request for resource data regarding at least one observed resource. The subscription request is sent from a watching client. The subscription request comprises a reference to at least one notification rule being pre-configured in a database. The subscription request may be realised as a SUBSCRIBE message supplemented with said reference, e.g. SUBSCRIBE <ref> in accordance with the SIP (Session Initiation Protocol), i.e. SUBSCRIBE <ref>.

Then, in another **step 702,** the notification server obtains the pre-configured notification rules from the database according to the reference. The obtainment can be performed as an HTTP GET operation in accordance with XCAP. Furthermore, in the case where the notification server and the database are not associated with the same communication network, the obtainment can be performed over a network-to-network interface (NNI), as indicated in an embodiment above. The obtained notification rule(s) can define e.g. which resource data are desired by the watching client, which updates of resource data the watching client will receive, how often the watching client will be updated, etc. Notification rules defining which resource data are of interest to a watching client may be defined in a what-filter, or presence-filter. Notification rules defining when and/or for which resource data status changes the watching client will be updated may be defined as a trigger-filter or delivery-filter.

In a subsequent **step 706,** resource data regarding the observed resource(s) that are served by the resource data server are retrieved. In the case when the notification server serves at least one resource data server, the retrieval can be performed by so called back-end subscriptions. The notification server can either retrieve all resource data which the resource data server agrees to supply (described with reference to figure 3), or just the desired resource data (described with reference to figure 4). In case of retrieving just the desired resource data, the notification server splits up the obtained notification rule(s) and requests only resource data being desired by the watching client, from each respective resource data server.

In the case when the resource data server acts also as notification server (described above with reference to figures 5 and 6), the resource data server retrieves the desired resource data from a storage unit (not shown) to which the resource data server has access. The storage unit may be implemented as e.g. a separate database or an internal storage unit in the resource data server. The retrieval of resource data according to each of the cases described in step 706, can be implemented by subscription messages and notifications.

In a final **step 710,** the notification server controls the delivery of notifications supplemented with the desired resource data to the watching client. The notifications are sent to the watching client in accordance with at least one of the notification rules obtained in step 702, the notifying rule(s) being intended to regulate the delivery of notifications to the watching client. Typically, such notification rules are defined in a trigger-filter.

In an optional intermediate **step 704,** performed between the steps 702 and 706, the subscription requests may be transferred into another resource data model, applied by the resource data server. However, step 704 is an optional step (illustrated by dashed lines in the figure), and will be performed in cases where different resource data models are applied by the watching client and the resource data server.

In another optional intermediate **step 708,** performed between the steps 706 and 710, the notifications may be transferred into the resource data model, applied by the watching client. According to both the additional steps 704 and 708, at least one of the notification rules obtained in step 702 may define the transformation between the different resource data models.

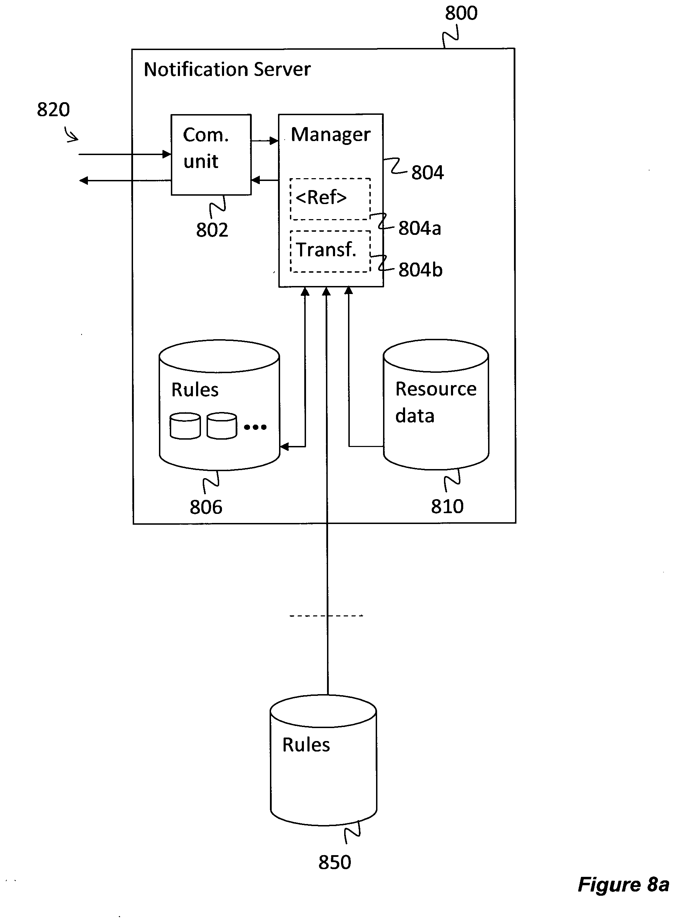

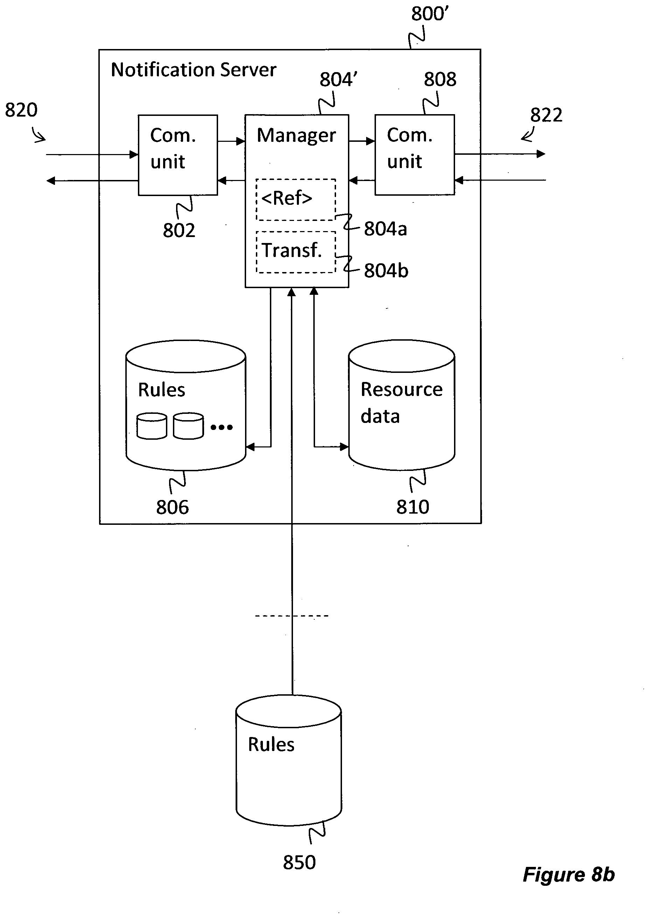

In an alternative embodiment, based on the embodiment above, the resource data server acts also as a notification server (described with reference to figure 5). Step 700 according to this alternative embodiment differs from the embodiment described above in that the subscription request(s) sent by the watching client are forwarded via another notification server with which the watching client is associated, without being affected. Correspondingly, the step 710 differs from the embodiment described above in that the notifications sent to the watching client are forwarded to the watching client, without being affected. With reference to FIGURES 8a and 8b, illustrating block diagrams, two embodiments of a notification server 800, 800' for providing resource data regarding an observed resource to a watching client will now be described. The notification server 800, 800' comprises a first communication unit 802, a notification server manager 804, 804', a notification rules storage unit 806, an optional second communication unit 808, and a resource data storage unit 810.

The first communication unit 802 is adapted to receive a subscription request sent from a watching client (not shown) on a communication link 820. The subscription request comprises a reference to at least one notification rule being pre-configured in a database 850 for the watching client. The notification server manager 804, 804' is adapted to obtain the pre-configured notification rule(s) based on the reference. The notification server manager 804, 804' comprises a reference unit 804a adapted to handle the reference comprised in the subscription request. The reference unit 804a is adapted to identify the reference to be used for the obtainment. The obtainment can be performed by a HTTP GET operation, as described in an embodiment above. Furthermore, in the case that the database 850 is not associated with the same communication network as the notification server 800, the obtainment may be performed over a Network-to-Network Interface (NNI) (illustrated with a dashed line).

The notification rules storage unit 806 is adapted to receive the obtained notification rule(s) from the notification server manager 804, 804' and store them. Moreover, the notification rules storage unit 806 can store notification rules of different categories, e.g. what-rules and trigger-rules, etc., as described in an embodiment above.

The notification server manager 804, 804' is further adapted to retrieve resource data regarding the observed resource(s). The retrieval can be performed either from the internal resource data storage unit 810 (described below), or from a resource data server (not shown) over a second communication link 822. The notification server 800 is adapted to execute the methods shown in figures 5 and 6 (the notification server shown in figure 8a). The notification server 800' is instead adapted to execute the methods shown in figures 3 and 4 (shown in figure 8b).

The notification server manager 804' may be further adapted to split up the obtained notification rule(s) and apply the notification rule(s) that are relevant for each observed resource. Alternatively, the retrieval may be performed without applying the notification rule(s). In that case (described above with reference to figure 3), the notification server manager 804, 804' is instead adapted to retrieve all resource data which any one of the observed resources agrees to supply to the watching client.

In the case that the resource data will be retrieved from a resource data server (referring to figure 8b), the notification server 800' comprises the second communication unit 808 adapted to receive a request or requests for resource data formed by the notification server manager 804', and send the request(s) to the resource data server (not shown) on a second communication link 822, the resource data server having access to resource data for the observed resource(s). The second communication unit 808 is further adapted to receive the requested resource data from the resource data server on the second communication link 822, e.g. as back-end subscriptions. The retrieval of the resource data from a resource data server may be performed by one or more back-end subscriptions. The notification server manager 804' is further adapted to receive the resource data which the second communication unit 808 have received, and store them in the resource data storage unit 810.

Furthermore, the notification server manager 804, 804' is adapted to form one or more notifications comprising at least some of the stored resource data, based on any of the obtained notification rule(s) intended to regulate the delivery of notifications, e.g. a notification rule defined in a trigger filter. The first communication unit 802 is further adapted to receive the formed notification(s) and send them to the watching client on the first communication link 820.

Additionally, the notification server manager 804, 804' may also comprise a transformer 804b, adapted to transform messages and subscriptions between two resource data models. The transformer 804b is adapted to apply at least one of the obtained notification rule(s) and transform the request(s) for resource data from the observed resource, into the resource data model applied by the resource data server. Correspondingly, the transformer 804b is also adapted to transform the resource data being received from the observed resource into the resource data model applied by the watching client. Although the transformer 804b is implemented to transform the requests to be sent to the resource data server and the notifications received from the resource data server, it should be noted that a skilled person will be able to implement the function of the transformer 804b to transform the requests received from the watching client and the notifications to be sent to the watching client instead. The functions of the transformer may be implemented in practice by any suitable hardware and/or software.

Alternatively, according to any of the embodiments described above, the subscription request(s) received by the first communication unit 802 may be received via another notification server (not shown).

Even though the messages and notifications in the described embodiments are realised as messages according to SIP, any other suitable protocol can be used instead, e.g. HTTP, TCP, SMPP, or SMTP.

Moreover, although the notification server 800, 800' according to the embodiments described above comprises separate units for communicating, storing and managing of subscriptions to resource data, it is not limited thereto. A skilled person will be able to implement any the functions of these units in one and the same unit. For instance may the functions of the notification rules storage unit 806 and the resource data storage unit 810 be implemented in the notification rules manager 804, 804'.

In the figures illustrating the embodiments above, the notification servers and resource data servers are implemented as Resource List Servers (RLS) and Presence Servers (PS), respectively. However, a skilled person will be able to implement these functions in practice by means of any suitable hardware or software, e.g. any suitable notification server or resource data server.

By means of the present invention, an effective method for subscribing to resource data for one or more observed resources is achieved. A watching client supplements a reference to pre-configured notification rule(s) regarding the observed resource(s), to the subscribing request(s), instead of the actual notification rule(s). The amount of information being transmitted with plural subscription request(s) for a watching client will therefore be reduced. Furthermore, by transforming the resource data being transferred between the watching client and the observed resource(s) into one and the same resource data model, the amount of information can be further reduced.

The invention is generally defined by the following independent claims.

### ABBREVIATION LIST

- IP: Internet Protocol
- IMS: IP Multimedia Subsystem
- SIP: Session Initiation Protocol
- XML: extended Markup Language
- XDMS: XML Document Management Server
- XCAP: XML Configuration Access Protocol
- RLS: Resource List Server
- PS: Presence Server

## Claims

1. A method in a notification server (300) for providing resource data regarding at least one resource to a watching client, the method **characterized by** the following steps:
• receiving (700) a subscription request sent from the watching client for the resource data regarding the at least one resource, the subscription request comprising a reference to a filter being pre-configured in a database, the filter defining one or more notification rules for the watching client,
• obtaining (702) the one or more notification rules from the database according to the reference to the filter, and
• controlling delivery (710) of notifications including the resource data to the watching client based on the filter.

2. The method according to claim 1, wherein the step of controlling further comprises applying at least one of the obtained one or more notification rule(s) for either retrieving (706) the resource data from a resource data server, or delivering (710) the notifications.

3. The method according to claim 2, wherein at least one of the obtained one or more notification rules is applied for either transforming (704) the received subscription request from a resource data model applied by the watching client into a resource data model applied by at least one of the resources, or
transforming (708) the retrieved resource data from the resource data model applied by the at least one of the resources into the resource data model applied by the watching client.

4. The method according to any of claims 1 to 3, wherein the filter is formatted in accordance with the eXtended Markup Language, XML, format and the database is stored in an XML Document Management Server, XDMS.

5. The method according to any of claims 1 to 4, wherein the filter defines the one or more notification rules regarding at least one of: notifications with a certain type of the resource data, notifications not exceeding a maximum data amount, notifications for one or more specific resources, and notifications at certain times of day, week or season.

6. The method according to any of claims 1 to 5, wherein the filter defines the one or more notification rules regarding transformation of request messages and the notifications from a first resource data model to a second resource data model.

7. A notification server (800, 800') for providing resource data regarding at least one resource to a watching client, the notification server (800, 800') **characterized by**:
• a first communication unit (802) adapted to receive a subscription request to the resource data regarding the at least one resource from the watching client on a first communication link (820), and deliver one or more notifications based on a filter, the notifications comprising the resource data on the watching client on the first communication link (820),
• a notification rules manager (804, 804') adapted to identify a reference to the filter from the subscription request, obtain the filter from a database (850) based on the reference, where one or more notification rules are defined in the filter, and further adapted to retrieve the resource data, and form the notifications comprising at least some of the resource data,
• a notification rules storage unit (806) adapted to be uploaded with the obtained one or more notification rule(s) by the notification rules manager (804, 804') and store the obtained one or more notification rule(s), and
• a resource data storage unit (810) adapted to store the resource data, and wherein the notification rules manager (804, 804') is further adapted to apply at least one of the obtained one or more notification rules for either performing the retrieval of the resource data, or forming the notifications.

8. The notification server (800, 800') according to claim 7, wherein the notification rules manager (804, 804') is further adapted to split up the obtained one or more notification rule(s) and apply the obtained one or more notification rule(s) being relevant for each observed at least one resource.

9. The notification server (800) according to claim 7 or 8, wherein the notification rules manager (804) is further adapted to retrieve the resource data from the resource data storage unit (810).

10. The notification server (800') according to claim 7 or 8, wherein the notification rules manager (804') is further adapted to retrieve the resource data from a resource data server, the notification server (800') comprises a second communication unit (808) adapted to perform the retrieval of the resource data from the resource data server on a second communication link (822), and the resource data storage unit (810) is further adapted to be uploaded with the retrieved resource data by the notification rules manager (804').

11. The notification server (800, 800') according to any of claims 7 to 10, further comprising a transformer (804b) adapted to apply at least one of the obtained one or more notification rules for at least one of:
• transforming the subscription request(s) received from the first communication unit (802) from a resource data model applied by the watching client into a resource data model applied by at least one of the resources, and
• transforming the notifications to be sent by the first communication unit (802) from the resource data model applied by the at least one of the resources into the resource data model applied by the watching client.

## Patentansprüche

1. Verfahren in einem Benachrichtigungsserver (300) zum Bereitstellen von Ressourcendaten bezüglich mindestens einer Ressource an einen anfragenden Kunden, wobei das Verfahren durch die folgenden Schritte gekennzeichnet ist:
• Empfangen (700) einer Abrufanfrage vom anfragenden Kunden für die Ressourcendaten bezüglich mindestens einer Ressource, wobei die Abrufanfrage einen Verweis auf einen Filter umfasst, der in einer Datenbank vorkonfiguriert wird, wobei der Filter eine oder mehrere Benachrichtigungs-regeln für den anfragenden Kunden definiert,
• Erhalten (702) der einen oder der mehreren Benachrichtigungsregeln aus der Datenbank gemäß dem Verweis auf den Filter und
• Steuern der Lieferung (710) von Benachrichtigungen, einschließlich Ressourcendaten, an den Kunden auf Grundlage des Filters.

2. Verfahren nach Anspruch 1, wobei der Schritt des Steuerns ferner das Anwenden mindestens einer der erhaltenen einen oder mehreren Benachrichtigungsregeln(n) entweder zum Abrufen (706) der Ressourcendaten aus einem Ressourcendatenserver oder zum Liefern (710) der Benachrichtigungen umfasst.

3. Verfahren nach Anspruch 2, wobei mindestens eine der erhaltenen einen oder mehreren Benachrichtigungsregeln entweder zum Umwandeln (704) der empfangenen Abrufanfrage von einem durch den anfragenden Kunden angewendeten Ressourcendatenmodell in ein durch mindestens eine der Ressourcen angewendetes Ressourcendatenmodell oder zum Umwandeln (708) der abgerufenen Ressourcendaten von dem durch die mindestens eine der Ressourcendaten angewendeten Ressourcendatenmodell in das durch den zusehenden Kunden angewendete Ressourcendatenmodell angewendet wird.

4. Verfahren nach einem der Ansprüche 1 bis 3, wobei der Filter gemäß dem Extended Markup Language-XML-Format formatiert ist und die Datenbank in einem Server für die Verwaltung von XML-Dokumenten (XML Document Management Server), XDMS, gespeichert ist.

5. Verfahren nach einem der Ansprüche 1 bis 4, wobei der Filter die eine oder die mehreren Benachrichtigungsregeln bezüglich mindestens eines des Folgenden definiert: Benachrichtigungen mit einem bestimmten Typ von Ressourcendaten, Benachrichtigungen, die eine Datenhöchstmenge nicht überschreiten, Benachrichtigungen für eine oder mehrere bestimmte Ressourcen und Benachrichtigungen an bestimmten Tages-, Wochen- oder Saisonzeiten.

6. Verfahren nach einem der Ansprüche 1 bis 5, wobei der Filter die eine oder die mehreren Benachrichtigungsregeln bezüglich der Umwandlung von Anfragenachrichten und der Benachrichtigungen von einem ersten Ressourcendatenmodell in ein zweites Ressourcendatenmodell definiert.

7. Benachrichtigungsserver (800, 800`) zum Bereitstellen von Ressourcendaten bezüglich mindestens einer Ressource an einen anfragenden Kunden, wobei der Benachrichtigungsserver (800, 800`) durch Folgendes gekennzeichnet ist:
• eine erste Kommunikationseinheit (802), die dazu ausgelegt ist, eine Abrufanfrage für die Ressourcendaten bezüglich der mindestens einen Ressource von einem anfragenden Kunden über eine erste Kommunikations-verbindung (820) zu empfangen und eine oder mehrere Benachrichtigungen auf Grundlage eines Filters zu liefern, wobei die Benachrichtigungen die Ressourcendaten des anfragenden Kunden an der ersten Kommunikationsverbindung (820) umfassen,
• eine Vorrichtung (804, 804`) zur Verwaltung von Benachrichtigungsregeln, die dazu ausgelegt ist, einen Verweis auf den Filter in der Abrufanfrage zu identifizieren, den Filter auf Grundlage des Verweises aus einer Datenbank (850) zu erhalten, wobei in dem Filter eine oder mehrere Benachrichtigungs-regeln definiert sind, und ferner dazu ausgelegt ist, die Ressourcendaten abzurufen und die Benachrichtigungen zu erstellen, die zumindest einige der Ressourcendaten umfassen,
• eine Speichereinheit (806) für die Benachrichtigungsregeln, die dazu ausgelegt ist, entsprechend der/den durch die Vorrichtung (804, 804`) zur Verwaltung von Benachrichtigungsregeln erhaltenen einen oder mehreren Benachrichtigungsregel(n) aktualisiert zu werden und die erhaltene(n) eine oder mehreren Benachrichtigungsregel(n) zu speichern, und
• eine Speichereinheit (810) für Ressourcendaten, die dazu ausgelegt ist die Ressourcendaten zu speichern und wobei die Vorrichtung (804, 804`) zur Verwaltung von Benachrichtigungsregeln ferner dazu ausgelegt ist, mindestens eine der erhaltenen einen oder mehreren Benachrichtigungsregel(n) entweder zum Durchführen des Abrufens der Ressourcendaten oder zum Bilden der Benachrichtigungen anzuwenden.

8. Benachrichtigungsserver (800, 800`) nach Anspruch 7, wobei die Vorrichtung (804, 804`) zur Verwaltung von Benachrichtigungsregeln ferner dazu ausgelegt ist, die erhaltene(n) eine oder mehreren Benachrichtigungsregel(n) aufzuteilen und die erhaltene(n) eine oder mehreren Benachrichtigungsregel(n), die jeweils für die betroffene mindestens eine Ressource relevant ist, anzuwenden.

9. Benachrichtigungsserver (800) nach Anspruch 7 oder 8, wobei die Vorrichtung (804) zur Verwaltung von Benachrichtigungsregeln ferner dazu ausgelegt ist, die Ressourcendaten aus der Speichereinheit (810) für Ressourcendaten abzurufen.

10. Benachrichtigungsserver (800`) nach Anspruch 7 oder 8, wobei die Vorrichtung (804`) zur Verwaltung von Benachrichtigungsregeln ferner dazu ausgelegt ist, die Ressourcendaten aus einem Ressourcendatenserver abzurufen, wobei der Benachrichtigungsserver (800`) eine zweite Kommunikationseinheit (808) umfasst, die dazu ausgelegt ist, das Abrufen der Ressourcendaten aus dem Ressourcendatenserver über eine zweite Kommunikationsverbindung (822) durchzuführen, und die Speichereinheit (810) für Ressourcendaten ferner dazu ausgelegt ist, entsprechend den durch die Vorrichtung (804`) zur Verwaltung von Benachrichtigungsregeln abgerufenen Ressourcendaten aktualisiert zu werden.

11. Benachrichtigungsserver (800, 800`) nach einem der Ansprüche 7 bis 10, ferner umfassend eine Umwandlungsvorrichtung (804b), die dazu ausgelegt ist, mindestens eine der erhaltenen einen oder mehreren Benachrichtigungsregeln für eines des Folgenden anzuwenden:
• Umwandeln der von der ersten Kommunikationseinheit (802) empfangenen Abrufanfrage(n) von einem durch den anfragenden Kunden angewendeten Ressourcendatenmodell in ein durch mindestens eine der Ressourcen angewendetes Ressourcendatenmodell und
• Umwandeln der Benachrichtigungen, die durch die erste Kommunikations-einheit (802) gesendet werden sollen, von dem durch die mindestens eine der Ressourcen angewendeten Ressourcendatenmodell in das durch den zusehenden Kunden angewendete Ressourcendatenmodell.

## Revendications

1. Procédé dans un serveur de notification (300) destiné à fournir des données de ressources concernant au moins une ressource à un client de surveillance, le procédé étant **caractérisé par** les étapes suivantes :
• la réception (700) d'une demande d'abonnement envoyée depuis le client de surveillance pour les données de ressources concernant l'au moins une ressource, la demande d'abonnement comprenant une référence à un filtre qui est préconfiguré dans une base de données, le filtre définissant une ou plusieurs règles de notification pour le client de surveillance,
• l'obtention (702) de la ou des règles de notification provenant de la base de données en fonction de la référence au filtre, et
• le contrôle de la remise (710) de notifications comportant les données de ressources au client de surveillance sur la base du filtre.

2. Procédé selon la revendication 1, dans lequel l'étape de contrôle comprenant en outre l'application d'au moins une de la ou des règle(s) de notification obtenue(s) soit pour récupérer (706) les données de ressources depuis un serveur de données de ressources, soit pour remettre (710) les notifications.

3. Procédé selon la revendication 2, dans lequel au moins une de la ou des règles de notification est appliquée soit pour transformer (704) la demande d'abonnement reçue depuis un modèle de données de ressources appliqué par le client de surveillance en un modèle de données de ressources appliqué par au moins une des ressources, soit pour
transformer (708) les données de ressources récupérées depuis le modèle de données de ressources appliqué par l'au moins une des ressources dans le modèle de données de ressources appliqué par le client de surveillance.

4. Procédé selon l'une quelconque des revendications 1 à 3, dans lequel le filtre est formaté conformément au format du langage de balisage étendu (XML) et la base de données est stockée dans un serveur de gestion de documents XML (XDMS).

5. Procédé selon l'une quelconque des revendications 1 à 4, dans lequel le filtre définit la ou les règles de notification concernant au moins une des opérations suivantes : notifications avec un certain type de données de ressources, notifications n'excédant pas une quantité maximale de données, notifications pour une ou plusieurs ressources spécifiques et notifications à certains moments de la journée, de la semaine ou de la saison.

6. Procédé selon l'une quelconque des revendications 1 à 5, dans lequel le filtre définit la ou les règles de notification concernant la transformation des messages de demande et les notifications provenant d'un premier modèle de données de ressources en un second modèle de données de ressources.

7. Serveur de notification (800, 800') destiné à fournir des données de ressources concernant au moins une ressource à un client de surveillance, le serveur de notification (800, 800') étant **caractérisé par** :
• une première unité de communication (802) adaptée pour recevoir une demande d'abonnement aux données de ressources concernant l'au moins une ressource provenant du client de surveillance sur un premier lien de communication (820), et à délivrer une ou plusieurs notifications sur la base d'un filtre, les notifications comprenant les données de ressources du client de surveillance sur le premier lien de communication (820),
• un gestionnaire de règles de notification (804, 804') adapté pour identifier une référence au filtre provenant de la demande d'abonnement, pour obtenir le filtre provenant d'une base de données (850) sur la base de la référence où, une ou plusieurs règles de notification sont définies dans le filtre, et en outre adapté pour récupérer les données de ressources, et pour former les notifications comprenant au moins certaines des données de ressources,
• une unité de stockage de règles de notification (806) adaptée pour être téléchargée avec la ou les règle(s) de notification obtenue(s) par le gestionnaire de règles de notification (804, 804') et pour stocker la ou les règle(s) de notification obtenue(s), et
• une unité de stockage des données de ressources (810) adaptée pour stocker les données de ressources, et dans lequel le gestionnaire de règles de notification (804, 804') est en outre adapté pour appliquer au moins une des règles de notification obtenues soit pour effectuer la récupération des données de ressources, soit pour former les notifications.

8. Serveur de notification (800, 800') selon la revendication 7, dans lequel le gestionnaire de règles de notification (804, 804') est en outre adapté pour séparer la ou les règle(s) de notification obtenue(s) et pour appliquer la ou les règle(s) de notification obtenue(s) qui sont pertinente(s) pour au moins chaque ressource observée.

9. Serveur de notification (800) selon la revendication 7 ou 8, dans lequel le gestionnaire de règles de notification (804) est en outre adapté pour récupérer les données de ressources provenant de l'unité de stockage de données de ressources (810).

10. Serveur de notification (800') selon la revendication 7 ou 8, dans lequel le gestionnaire de règles de notification (804') est en outre adapté pour récupérer les données de ressources provenant d'un serveur de données de ressources, le serveur de notification (800') comprenant une seconde unité de communication (808) adaptée pour effectuer la récupération des données de ressources provenant du serveur de données de ressources sur un second lien de communication (822) et l'unité de stockage de données de ressources (810) est en outre adaptée pour être téléchargée avec les données de ressources récupérées par le gestionnaire de règles de notification (804').

11. Serveur de notification (800, 800') selon l'une quelconque des revendications 7 à 10, comprenant en outre un transformateur (804b) adapté pour appliquer au moins une de la ou des règles de notification obtenues pour au moins l'une des opérations suivantes :
• la transformation de la ou des demande(s) d'abonnement reçue(s) depuis la première unité de communication (802) provenant d'un modèle de données de ressources appliqué par le client de surveillance en un modèle de données de ressources appliqué par au moins une des ressources, et
• la transformation des notifications à envoyer par la première unité de communication (802) provenant du modèle de données de ressources appliqué par l'au moins une des ressources en modèle de données sur les ressource appliqué par le client de surveillance.
